# EUROPEAN PATENT SPECIFICATION

(11) **EP 3 634 083 B1**
(45) Date of publication and mention of the grant of the patent: **06.08.2025**
(21) Application number: 17911659.5
(22) Date of filing: 27.05.2017
(51) Int. Cl.: H04W 4/44, H04W 88/10, H04W 84/04, H04W 84/06

(54) **COMMUNICATIONS NETWORK ARCHITECTURE AND SIGNALING TRANSPORT METHOD AND APPARATUS**
KOMMUNIKATIONSNETZWERKARCHITEKTUR SOWIE SIGNALISIERUNGSTRANSPORTVERFAHREN UND -VORRICHTUNG
ARCHITECTURE DE RÉSEAU DE COMMUNICATIONS, ET PROCÉDÉ ET APPAREIL DE TRANSPORT DE SIGNALISATION

(43) Date of publication of application: 08.04.2020
(73) Proprietor: Beijing Xiaomi Mobile Software Co., Ltd., Beijing 100085 (CN)
(72) Inventor: LIU, Yang, Beijing 100085 (CN)
(74) Representative: dompatent von Kreisler Selting Werner - Partnerschaft von Patent- und Rechtsanwälten mbB
(86) International application number: PCT/CN2017/086383
(87) International publication number: WO 2018/218448

(56) References cited:
- CN-A- 105 843 183
- CN-A- 106 375 738
- CN-A- 106 604 205
- CN-U- 204 350 174
- CN-U- 204 350 174
- CN-U- 205 788 719
- US-A1- 2015 326 302
- US-A1- 2017 023 939
- US-A1- 2017 041 100
- US-A1- 2017 142 766

## Description

### TECHNICAL FIELD

The present disclosure relates to the field of communications, and in particular, to a communication network architecture, a signaling transmission method, and an apparatus.

### BACKGROUND

At present, applications of drones are becoming more and more extensive. In the related art, if an LTE (Long Term Evolution) communication system is used to communicate with a drone, a bandwidth and delay required for current services of the drone cannot be ensured if a point-to-point communication system is used to communicate with the drone. However, interaction with a network side in real time may be difficult to achieve.

5G, namely NR (New Radio) network related standardization is being carried out in 3GPP (3rd Generation Partnership Project). In the 5G system, there is no solution for communicating with the drone currently.

CN 204 350 174 U discloses a beyond-the-horizon air sightseeing system including an aircraft, a communication network base station, and a user terminal, the aircraft includes a shooting module, a communication module, and a control module, the user terminal includes a transmitting module, a communication module, and a display module, and the communication network base station establishes a communication link with the communication module of the aircraft and the communication module of the user terminal via communication network. The communication between the aircraft and the user terminal is realized through the communication network base station, and the transmission of control orders and the returning of images shot by the aircraft can be realized.

US 2017/142766 A1 discloses a serving cell performing a connection establishment procedure with terminal equipment, stores the connection configuration information of the terminal equipment, and maintains the connection configuration information of the terminal equipment transited to an idle state depending on a set information maintaining condition. Further, the serving cell provides a service to the terminal equipment using the connection configuration information of the terminal equipment without the connection establishment procedure when the terminal equipment in the idle state tries a re-access.

### SUMMARY

The invention is defined by the independent claims.

A first aspect of the invention comprises a communication network architecture as set forth in claim 1.

A second aspect of the invention comprises a signalling transmission method as set forth in claim 4.

A third aspect of the invention comprises a signalling transmission apparatus as set forth in claim 7.

A fourth aspect of the invention comprises a computer-readable storage medium as set forth in claim 9.

Some preferred embodiments are defined in the dependent claims.

The technical solutions provided by the embodiments of the present disclosure may include the following beneficial effects:
The communication network architecture includes at least one controllable device and a multi-mode base station, the multi-mode base station at least supporting a 5G communication mode and a point-to-point communication mode. Further, the controllable device and the multi-mode base station communicate with one another on the basis of the point-to-point communication mode. In the above communication network architecture, the multi-mode base station can perform normal communication with the terminal on the basis of the 5G communication mode, and communicate with the controllable device on the basis of the point-to-point communication mode, thereby providing a solution for a network architecture that performs the communication with the controllable device in combination with the 5G system.

In the embodiment of the present disclosure, optionally, the multi-mode base station may be a common mode base station of a 5G communication system and a point-to-point communication system. Therefore, on the basis of the existing wireless system, only a small change is required, and a multi-mode base station that communicates with the controllable device in combination with the 5G system can be realized with high availability.

In the communication network architecture provided by the embodiment of the present disclosure, optionally, at least one communication node may be further included, wherein the communication node and the controllable device communicate with one another on the basis of the point-to-point communication mode, and the communication node and the multi-mode base station communicate with one another on the basis of the 5G communication mode. With the above communication network architecture, it is possible to communicate with more controllable devices through different communication nodes at the same time point, which achieves high availability.

In the communication network architecture provided by the embodiments of the present disclosure, a plurality of controllable devices communicates with each other on the basis of the point-to-point communication mode, thereby avoiding collision between controllable devices and better assisting users in locating and coordinating controllable devices, etc..

In the embodiment of the present disclosure, after receiving the control signaling transmitted by the multi-mode base station on the basis of the point-to-point communication mode, the controllable device may perform the corresponding operation according to the control signaling. The control signaling is a signaling for controlling the controllable device and transmitted by the terminal to the multi-mode base station. Through the above processes, the multi-mode base station performs the point-to-point communication with the controllable device directly, thereby realizing the real-time communication with the controllable device in the 5G network system, and further, controlling the controllable device to perform the corresponding operation in real time.

In the embodiment of the present disclosure, optionally, the controllable device may further perform the corresponding operation according to a control instruction forwarded by the communication node on the basis of the point-to-point communication mode. In the above process, the communication node performs the point-to-point communication with the controllable device, while the communication node performs the 5G communication with the multi-mode base station. The purpose of real-time communication with the controllable device in the 5G network system is also achieved.

In the embodiment of the present disclosure, the controllable device may further transmit the feedback information collected in real time according to the control signaling to the multi-mode base station on the basis of the point-to-point communication mode directly. Or after the controllable device transmits the feedback information to the communication node on the basis of the point-to-point communication mode, the feedback information is transmitted by the communication node to the multi-mode base station on the basis of the 5G communication mode. Further, the multi-mode base station transmits the feedback information to the terminal. Through the above processes, the feedback information collected by the controllable device can be transmitted to the terminal in real time in the 5G system.

In the embodiment of the present disclosure, after receiving the control signaling transmitted by the terminal, the multi-mode base station may transmit the control signaling to the controllable device on the basis of the point-to-point communication mode, so that the controllable device can perform the corresponding operation according to the control signaling. Through the above processes, real-time communication with the controllable device is realized in the 5G system, and further, real-time control of the controllable device can be realized through the terminal.

It should be understood that the above general description and the following detailed description are merely exemplary and explanatory and should not be construed as limiting of the disclosure.

### BRIEF DESCRIPTION OF THE DRAWINGS

The accompanying drawings, which are incorporated in the specification and constitute a part of the specification, show exemplary embodiments of the present disclosure. The drawings along with the specification explain the principles of the present disclosure.
FIG. 1 is a schematic diagram of a communication network architecture according to an exemplary embodiment.
FIG. 2 is a schematic diagram of another communication network architecture according to an exemplary embodiment.
FIG. 3 is a schematic diagram of another communication network architecture, according to an exemplary embodiment.
FIG. 4 is a flowchart of a signaling transmission method according to an exemplary embodiment.
FIG. 5 is a flowchart of another signaling transmission method according to an exemplary embodiment.
FIG. 6A is a flowchart of another signaling transmission method according to an exemplary embodiment.
FIG. 6B is a flowchart of another signaling transmission method according to an exemplary embodiment.
FIG. 7 is a flowchart of another signaling transmission method according to an exemplary embodiment.
FIG. 8 is a flowchart of another signaling transmission method according to an exemplary embodiment.
FIG. 9 is a flowchart of another signaling transmission method according to an exemplary embodiment.
FIG. 10 is a flowchart of another signaling transmission method according to an exemplary embodiment.
FIG. 11 is a flowchart of another signaling transmission method according to an exemplary embodiment.
FIG. 12 is a flowchart of another signaling transmission method according to an exemplary embodiment.
FIG. 13 is a block diagram of a signaling transmission apparatus according to an exemplary embodiment.
FIG. 14 is a block diagram of another signaling transmission apparatus according to an exemplary embodiment.
FIG. 15A is a block diagram of another signaling transmission apparatus according to an exemplary embodiment.
15B is a block diagram of another signaling transmission apparatus according to an exemplary embodiment.
FIG. 16 is a block diagram of another signaling transmission apparatus according to an exemplary embodiment.
FIG. 17 is a block diagram of another signaling transmission apparatus according to an exemplary embodiment.
FIG. 18 is a block diagram of another signaling transmission apparatus according to an exemplary embodiment.
FIG. 19 is a block diagram of another signaling transmission apparatus according to an exemplary embodiment.
FIG. 20 is a schematic structural diagram of a signaling transmission apparatus according to an exemplary embodiment of the present disclosure.
FIG. 21 is a schematic structural diagram of another signaling transmission apparatus according to an exemplary embodiment of the present disclosure.

### DETAILED DESCRIPTION

Exemplary embodiments will be described in detail herein, examples of which are illustrated in the accompanying drawings. The following description refers to the same or similar elements in the different figures unless otherwise indicated. The embodiments described in the following exemplary embodiments do not represent all embodiments consistent with the present disclosure. Instead, they are merely examples of devices and methods consistent with aspects of the disclosure as detailed in the appended claims.

The terms used in the present disclosure are for the purpose of describing particular embodiments only, and are not intended to limit the present disclosure. As used in the present disclosure and the appended claims, the singular forms "a", "the" and "said" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc. may be used to describe various information in the present disclosure, such information should not be limited to these terms. These terms are only used to distinguish the same type of information from each other. For example, the first information may also be referred to as second information without departing from the scope of the invention as defined by the claims. Similarly, the second information may also be referred to as the first information. Depending on the context, the word "if" as used herein may be interpreted as "when" or "upon" or "in response to determining".

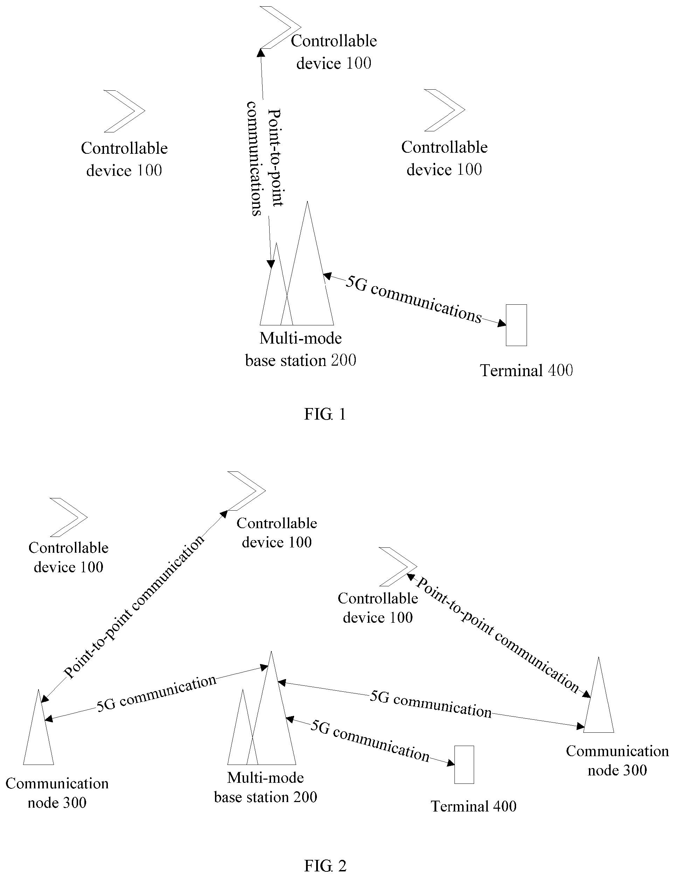

An embodiment of the present disclosure provides a communication network architecture. As shown in FIG. 1, the communication network architecture includes at least one controllable device 100 and a multi-mode base station 200. In the embodiment, the controllable device 100 can be a robot or a drone, the multi-mode base station 200 at least supports a 5G communication mode and a point-to-point communication mode.

Optionally, the multi-mode base station 200 may be a common mode base station of a 5G communication system and a point-to-point communication system. In the related art, the common mode base station refers to that different communication systems adopt the same chassis or cabinet. That is, different communication systems can adopt the same BBU (Building Baseband Unit) and RRU (Remote Radio Unit). In the embodiment of the present disclosure, the multi-mode base station 200 can employ a common mode base station of a 5G communication system and a point-to-point communication system.

In the communication network architecture shown in FIG. 1, the multi-mode base station 200 can also perform normal communication with the terminal 400 on the basis of the 5G communication mode. In addition, the multi-mode base station 200 and the controllable device 100 communicate with one another on the basis of the point-to-point communication mode, such as a PC5 mode. That is, in the communication network architecture provided by the embodiments of the present disclosure, the multi-mode base station 200 may communicate with the controllable device 100 by using a separate frequency, without affecting the normal wireless communication between the multi-mode base station 200 and the terminal 400.

In the above communication network architecture, the multi-mode base station can perform normal communication with the terminal on the basis of the 5G communication mode, and communicate with the controllable device on the basis of the point-to-point communication mode, thereby providing a solution for a network architecture that performs the communication with the controllable device in combination with the 5G system.

Considering that the controllable device 100 and the multi-mode base station 200 communicate with one another on the basis of the point-to-point communication mode, one multi-mode base station 200 can communicate with one controllable device 100 at a certain time point. However, this will result in a waste of 5G system resources. Therefore, another communication network architecture is further provided in the embodiment of the present disclosure. As shown in FIG. 2, FIG. 2 is another communication network architecture on the basis of the embodiment shown in FIG. 1, further including: at least one communication node 300. In the embodiment, corresponding to the controllable device 100, the communication node 300 can be a small base station; corresponding to the multi-mode base station 200, the communication node 300 can be a communication hotspot device.

In the above communication network architecture, in order to ensure the normal communication between the communication node 300 and the controllable device 100, the communication node 300 and the controllable device 100 can communicate with one another using a different frequency band and communication standard from those of the wireless communication in the related art. Optionally, the communication node 300 and the controllable device 100 can communicate with one another on the basis of the point-to-point communication mode, such as a PC5 manner; and the communication node 300 and the controllable device 100 communicate with one another using the wireless communication frequency band corresponding to the 5G communication system.

The communication node 300 and the multi-mode base station 200 can communicate with one another on the basis of the 5G communication mode.

In the above communication network architecture, one communication node 300 can perform the point-to-point communication with one controllable device 100 at a certain time point, while each communication node 300 can perform 5G communication with the multi-mode base station 200 through the preset communication interface 500, and the number of communication nodes performing communication with the multi-mode base station 200 can be multiple, thereby achieving the purpose of simultaneously communicating with a plurality of controllable devices 100 in combination with the 5G system at the same time point.

Optionally, the preset communication interface between the communication node 300 and the multi-mode base station 200 may be defined as a dN interface. The preset communication interfaces may connect with each other in a wireless manner or in a wired manner, and the preset communication interface supports 5G or a newly defined communication standard in the future. Among them, when the connection is conducted in a wired manner, the connection can be conducted through an optical fiber.

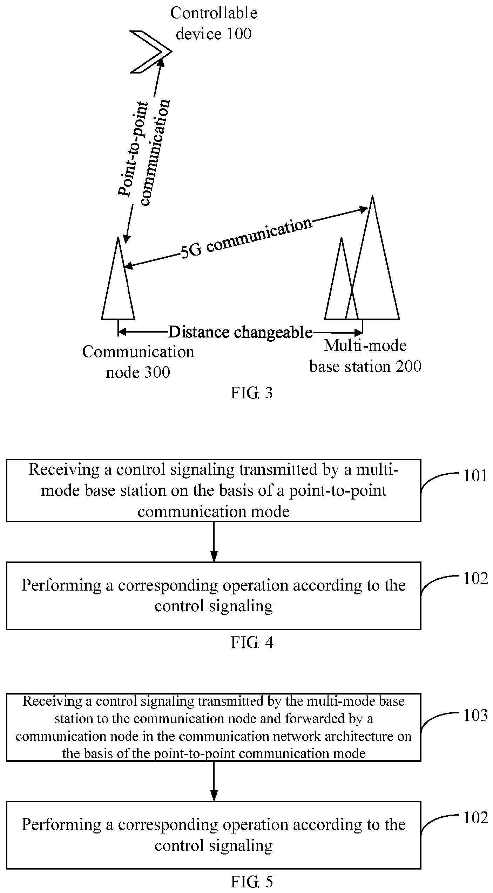

In practical applications, when the communication node 300 and the multi-mode base station 200 are connected in a wireless manner, the location of the communication node 300 may be mobile. As shown in FIG. 3, optionally, the communication node 300 may be disposed on a controller of the controllable device 100. Real-time communication with the controllable device 100 and the multi-mode base station 200 can be performed through the communication node 300.

When the communication node 300 and the multi-mode base station 200 are connected in a wired manner, the location of the communication node 300 may be fixed. Optionally, the communication node 300 may be disposed in a public place, such as a sports park or the like. The public can communicate with the controllable device 100 and the multi-mode base station 200 in real time through the communication node 300.

In the above embodiment, the communication network architecture may further include at least one communication node, and the communication node and the controllable device communicate with one another on the basis of the point-to-point communication mode, such as a PC5 manner, and the communication node and the multi-mode base station communicate with one another on the basis of the 5G communication mode. With the above communication network architecture, it is possible to communicate with more controllable devices through different communication nodes at the same time point, which achieves high availability.

In the embodiment of the present disclosure, in any of the above communication network architectures, optionally, when the number of the controllable devices 100 is multiple, the controllable devices 100 may communicate with each other on the basis of the point-to-point communication mode. Optionally, the relative position information and the like between the controllable device 100 and the other controllable device 100 can be automatically obtained by the controllable device 100 on the basis of the point-to-point communication mode. When the relative distance value indicated by the relative position information is less than a preset distance value, the controllable device 100 automatically performs eluding, thereby avoiding collision between the controllable devices 100 and better assisting users in locating and coordinating the controllable devices, etc..

The embodiment of the present disclosure further provides a signaling transmission method, which may be used in the controllable device in the above communication network architecture. Referring to FIG. 4, FIG. 4 is a signaling transmission method according to an embodiment of the present application, and includes the following steps.

In step 101, a control signaling transmitted by a multi-mode base station on the basis of a point-to-point communication mode is received, wherein the control signaling is a signaling for controlling the controllable device and transmitted by a terminal to the multi-mode base station.

In step 102, a corresponding operation is performed according to the control signaling.

In the above embodiment, after receiving the control signaling transmitted by the multi-mode base station on the basis of the point-to-point communication mode, the controllable device may perform the corresponding operation according to the control signaling. In the embodiment, the control signaling is a signaling for controlling the controllable device and transmitted by the terminal to the multi-mode base station. Through the above processes, the multi-mode base station performs the point-to-point communication with the controllable device directly, thereby realizing the real-time communication with the controllable device in the 5G network system, and further, controlling the controllable device to perform the corresponding operation in real time.

As for the above step 101, optionally, the terminal may be a smart phone, a computer, a personal digital assistant (PDA), or the like. The terminal may be bound to the controllable device in advance, and further, the terminal generates the control signaling for controlling the controllable device according to the related art, and transmits the control signaling to the multi-mode base station. The multi-mode base station can directly receive the control signaling.

Further, after receiving the control signaling, the multi-mode base station may transmit the control signaling to the controllable device on the basis of the point-to-point communication mode, such as a PC5 manner.

As for the above step 102, after receiving the control signaling transmitted by the multi-mode base station on the basis of the point-to-point communication mode, the controllable device may perform an operation corresponding to the control signaling.

Optionally, the operations include, but not limited to, takeoff, landing, altitude up or down, flying according to a preset trajectory, feedback operation of information, and the like. The feedback information collected by the controllable device may be height measurement information, geological exploration information, real-time image information, or other information that needs to be collected.

The embodiment of the present disclosure further provides another signaling transmission method. Referring to FIG. 5, FIG. 5 is another signaling transmission method on the basis of the embodiment shown in FIG. 4, which may further include the following steps.

In step 103, a control signaling transmitted by the multi-mode base station to the communication node and forwarded by a communication node in the communication network architecture on the basis of the point-to-point communication mode is received, wherein the control signaling is a signaling for controlling the controllable device and transmitted by a terminal to the multi-mode base station.

In this step, after the terminal transmits the control signaling to the multi-mode base station according to the related art, the multi-mode base station may determine a communication node corresponding to the controllable device in the communication network architecture, and transmit the control signaling to the communication node on the basis of the 5G communication mode.

Further, the control node forwards the control signaling to the controllable device on the basis of the point-to-point communication mode.

After receiving the control signaling forwarded by the communication node, the controllable device may perform the step 102 to perform the corresponding operation according to the control signaling.

In the embodiment of the present disclosure, optionally, the controllable device may further perform the corresponding operation according to a control instruction forwarded by the communication node on the basis of the point-to-point communication mode. In the above process, the communication node performs the point-to-point communication with the controllable device, while the communication node performs the 5G communication with the multi-mode base station. The purpose of real-time communication with the controllable device in the 5G network system is also achieved.

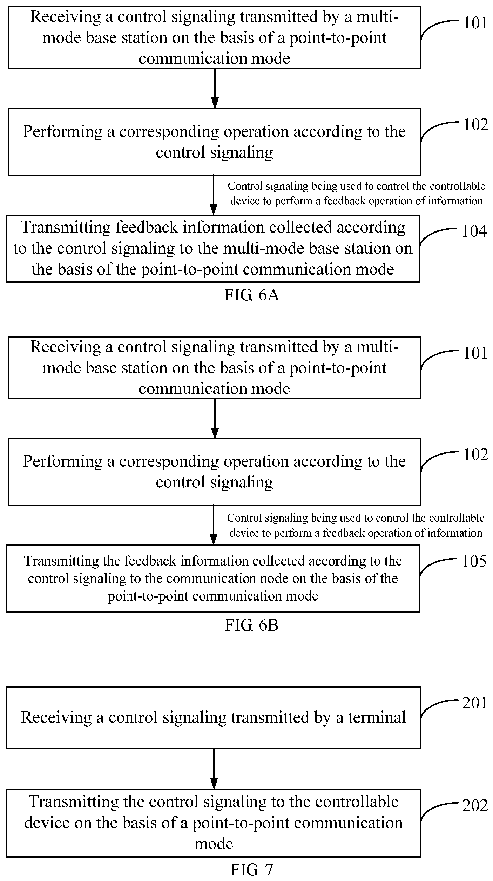

In the embodiment of the present disclosure, when the control signaling is used to control the controllable device to perform a feedback operation of information, the method is shown in FIG. 6A, and FIG. 6A is another signaling transmission method on the basis of the embodiment shown in FIG. 4, which may further include the following steps.

In step 104, feedback information collected according to the control signaling is transmitted to the multi-mode base station on the basis of the point-to-point communication mode, so that the multi-mode base station transmits the feedback information to the terminal.

In this step, the controllable device collects the feedback information on the basis of the control signaling according to the related art. Optionally, the feedback information may be height measurement information, geological exploration information, real-time image information, or other information that needs to be collected.

After the controllable device collects the feedback information, the feedback information may be directly transmitted to the multi-mode base station according to the point-to-point communication mode, such as a PC5 manner. After receiving the feedback information, the multi-mode base station may transmit the feedback information to the terminal according to the related art.

For example, the control signaling is to control the controllable device to perform aerial photography, and the controllable device may transmit the photographed real-time image to the multi-mode base station on the basis of a point-to-point communication mode, and then the multi-mode base station transmits the photographed real-time image to the terminal. The terminal displays the real-time image according to the related art. Through the above processes, the image acquired by the controllable device during aerial photography can be displayed to the user in real time, and the real-time communication between the controllable device and the terminal is realized in the 5G system.

In the embodiment of the present disclosure, when the control signaling is used to control the controllable device to perform a feedback operation of information, the method is shown in FIG. 6B, and FIG. 6B is another signaling transmission method on the basis of the embodiment shown in FIG. 4, which may further include the following steps.

In step 105, the feedback information collected according to the control signaling is transmitted to the communication node on the basis of the point-to-point communication mode, so that after the communication node transmits the feedback information to the multi-mode base station on the basis of the 5G communication mode, the feedback information is transmitted by the multi-mode base station to the terminal.

In this step, after collecting the feedback information on the basis of the control signaling according to the related art, the controllable device may transmit the feedback information to the corresponding communication node on the basis of the point-to-point communication mode, such as the PC5 mode. Further, the feedback information is transmitted by the communication node to the multi-mode base station on the basis of the 5G communication mode. After receiving the feedback information, the multi-mode base station transmits the feedback information to the terminal.

Through the above process, the real-time communication between the controllable device and the terminal is realized in the 5G system as well.

The embodiments of the present disclosure also provide another signaling transmission method, which may be used in a multi-mode base station in the above communication network architecture. Referring to FIG. 7, FIG. 7 is another signaling transmission method according to an embodiment of the present application, and includes the following steps.

In step 201, a control signaling transmitted by a terminal is received, wherein the control signaling is a signaling for controlling a controllable device in the communication network architecture.

In step 202, the control signaling is transmitted to the controllable device on the basis of a point-to-point communication mode, so that the controllable device performs a corresponding operation according to the control signaling.

In the above embodiment, after receiving the control signaling transmitted by the terminal, the multi-mode base station may transmit the control signaling to the controllable device on the basis of the point-to-point communication mode, so that the controllable device can perform the corresponding operation according to the control signaling. Through the above processes, real-time communication with the controllable device is realized in the 5G system, and further, real-time control of the controllable device can be realized through the terminal.

As for the above step 201, after generating the control signaling for controlling the controllable device according to the related art, the terminal may transmit the control signaling to the multi-mode base station, and the multi-mode base station directly receives the control signaling.

In the above step 202, after receiving the control signaling transmitted by the terminal, the multi-mode base station may directly transmit the control signaling to the controllable device on the basis of the point-to-point communication mode, such as a PC5 manner.

After receiving the control signaling, the controllable device may perform a corresponding operation according to the control signaling.

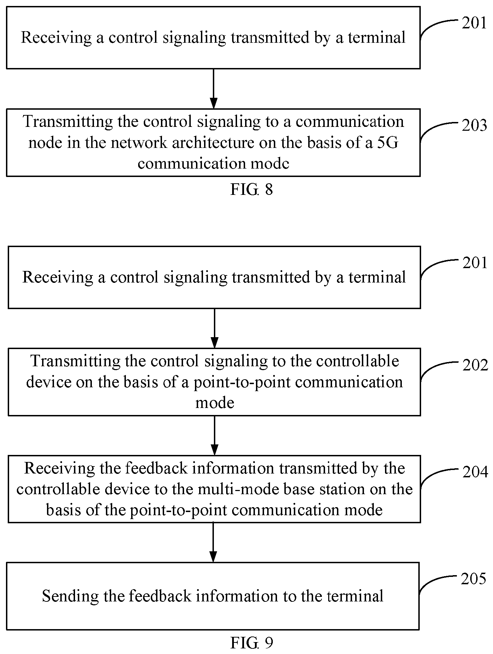

The embodiment of the present disclosure further provides another signaling transmission method, which is shown in FIG. 8. FIG. 8 is another signaling transmission method on the basis of the embodiment shown in FIG. 7. After the step 201, the following steps may also be included.

In step 203, the control signaling is transmitted to a communication node in the network architecture on the basis of a 5G communication mode, so that the communication node forwards the control signaling to the controllable device on the basis of the point-to-point communication mode.

In this step, after receiving the control signaling transmitted by the terminal, the base station may transmit the control signaling to the communication node on the basis of the 5G communication mode, and the communication node subsequently forwards the control signaling to the controllable device on the basis of the point-to-point communication mode.

After receiving the control signaling, the controllable device also performs the corresponding operation according to the control signaling.

In the above embodiment, the purpose of the real-time communication with the controllable device is also achieved in the 5G system, and further, the real-time control of the controllable device can be achieved through the terminal.

The embodiment of the present disclosure further provides another signaling transmission method. Referring to FIG. 9, FIG. 9 is another signaling transmission method on the basis of the embodiment shown in FIG. 7, which may further include the following steps.

In step 204, the feedback information transmitted by the controllable device to the multi-mode base station on the basis of the point-to-point communication mode is received, wherein the feedback information is information collected by the controllable device on the basis of the control signaling.

In this step, when the control signaling is used to control the controllable device to perform a feedback operation of information, the controllable device may perform information collection according to the control signaling, obtain feedback information, and then transmit the feedback information to the multi-mode base station on the basis of the point-to-point communication mode. The multi-mode base station directly receives the feedback information.

In step 205, the feedback information is transmitted to the terminal.

In this step, the multi-mode base station may transmit the feedback information to the terminal after receiving the feedback information according to the related art. The terminal may directly display the feedback information.

In the above embodiment, the multi-mode base station may directly receive the feedback information transmitted by the controllable device on the basis of the point-to-point communication, and then transmit the feedback information to the terminal. Through the above processes, the real-time communication between the controllable device and the terminal can be supported on the basis of the communication network architecture provided by the embodiment of the present disclosure.

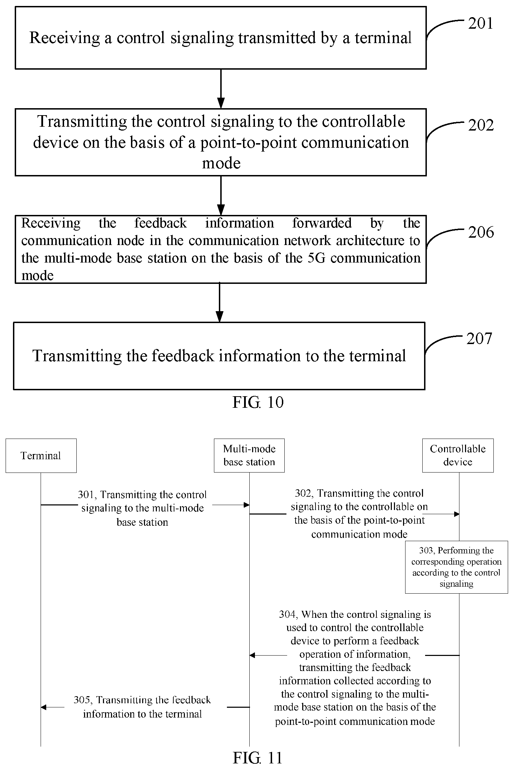

The embodiment of the present disclosure further provides another signaling transmission method. Referring to FIG. 10, FIG. 10 is another signaling transmission method on the basis of the embodiment shown in FIG. 7, further including the following steps.

In step 206, the feedback information forwarded by the communication node in the communication network architecture to the multi-mode base station on the basis of the 5G communication mode is received, wherein the feedback information is information collected by the controllable device on the basis of the control signaling.

In this step, after collecting the feedback information according to the control signaling, the controllable device transmits the feedback information to the corresponding communication node on the basis of the point-to-point communication mode. Further, the multi-mode base station may receive the feedback information forwarded by the above communication node to the multi-mode base station on the basis of the 5G communication mode.

In step 207, the feedback information is transmitted to the terminal.

In this step, the multi-mode base station may transmit the feedback information to the terminal according to the related art on the basis of the 5G communication mode. After receiving the feedback information, the terminal may display the feedback information.

In the above embodiment, the multi-mode base station may receive the feedback information forwarded by the communication node on the basis of the 5G communication mode, and then transmit the feedback information to the terminal. Through the above processes, the real-time communication between the controllable device and the terminal can also be supported on the basis of the communication network architecture provided by the embodiment of the present disclosure.

The embodiment of the present disclosure also provides another signaling transmission method, which may be used in any of the communication network architectures described above. Referring to FIG. 11, FIG. 11 is another signaling transmission method according to an embodiment of the present application, and includes the following steps.

In step 301, the terminal transmits the control signaling to the multi-mode base station, wherein the control signaling is a signaling for controlling a controllable device in the communication network architecture.

In step 302, the multi-mode base station transmits the control signaling to the controllable on the basis of the point-to-point communication mode.

In step 303, the controllable device performs the corresponding operation according to the control signaling.

In step 304, when the control signaling is used to control the controllable device to perform a feedback operation of information, the controllable device transmits the feedback information collected according to the control signaling to the multi-mode base station on the basis of the point-to-point communication mode.

In step 305, the multi-mode base station transmits the feedback information to the terminal.

Optionally, after receiving the feedback information, the terminal may perform the corresponding processing, for example, displaying the feedback information to the user.

In the above embodiment, the multi-mode base station may receive the control signaling transmitted by the terminal on the basis of the 5G communication mode, and then transmit the control signaling to the controllable device on the basis of the point-to-point communication mode, and the controllable device will perform the corresponding operation after receiving the control signaling. When the control signaling is used to control the controllable device to perform a feedback operation of information, the controllable device may transmit the feedback information to the multi-mode base station on the basis of the point-to-point communication mode as well, and then the multi-mode base station transmits the feedback information to the terminal. Through the above processes, the purpose of the real-time communication between the terminal and the controllable device is achieved.

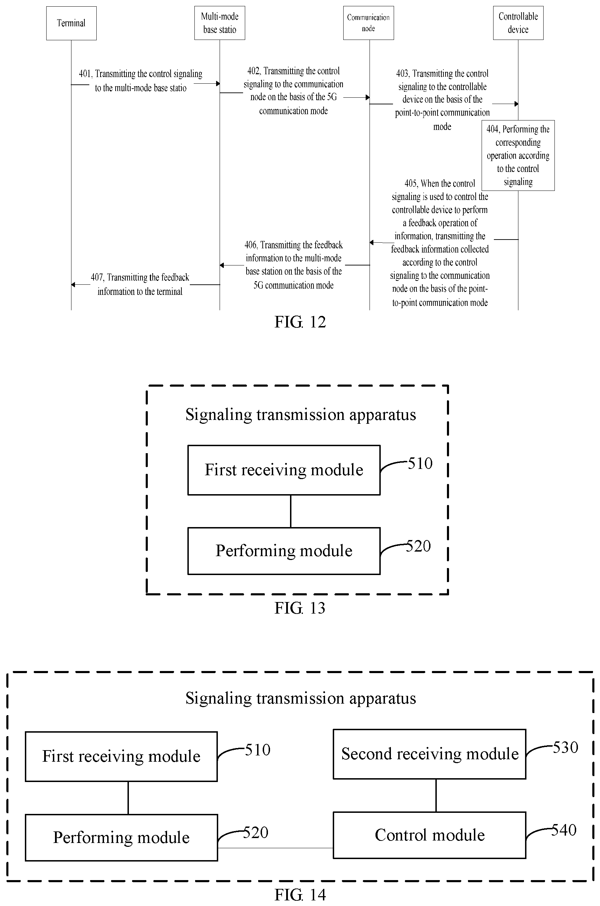

The embodiment of the present disclosure also provides another signaling transmission method, which may be used in any of the communication network architectures described above. Referring to FIG. 12, FIG. 12 is another signaling transmission method according to an embodiment of the present application, and includes the following steps.

In step 401, the multi-mode base station receives the control signaling transmitted by the terminal, wherein the control signaling is a signaling for controlling a controllable device in the communication network architecture.

In step 402, the multi-mode base station transmits the control signaling to the communication node on the basis of the 5G communication mode.

In step 403, the communication node forwards the control signaling to the controllable device on the basis of the point-to-point communication mode.

In step 404, the controllable device performs the corresponding operation according to the control signaling.

In step 405, when the control signaling is used to control the controllable device to perform a feedback operation of information, the controllable device transmits the feedback information collected according to the control signaling to the communication node on the basis of the point-to-point communication mode.

In step 406, the communication node transmits the feedback information to the multi-mode base station on the basis of the 5G communication mode.

In step 407, the multi-mode base station transmits the feedback information to the terminal.

Optionally, after receiving the feedback information, the terminal displays the feedback information.

In the above embodiment, the multi-mode base station may receive the control signaling transmitted by the terminal on the basis of the 5G communication mode, and then transmit the control signaling to the communication node on the basis of the 5G communication mode. Further, the communication node forwards the control signaling to the controllable device on the basis of the point-to-point communication mode. After receiving the control signaling, the controllable device will perform the corresponding operation. When the control signaling is used to control the controllable device to perform a feedback operation of information, the controllable device may transmit the feedback information to the communication node on the basis of the point-to-point communication mode. After the communication node forwards the feedback information to the multi-mode base station on the basis of the 5G communication mode, the multi-mode base station then transmits the feedback information to the terminal. Through the above processes, the purpose of the real-time communication between the terminal and the controllable device is also achieved.

For the foregoing various method embodiments, for the sake of simple description, they are all expressed as a series of action combinations, but those skilled in the art should understand that the present disclosure is not limited by the described action sequence, because according to the present disclosure, certain steps may be performed in other orders or concurrently.

Secondly, those skilled in the art should also understand that the embodiments described in the specification are optional embodiments, and the actions and modules involved are not necessarily required by the present disclosure.

Corresponding to the foregoing method embodiments implementing the application function, the present disclosure also provides an application function implementation apparatus and a corresponding terminal embodiment.

Referring to FIG. 13, which is a block diagram of a signaling transmission apparatus according to an exemplary embodiment, the apparatus is used in the controllable device in the above communication network architecture, and the apparatus includes:
a first receiving module 510, configured to receive a control signaling transmitted by a multi-mode base station on the basis of a point-to-point communication mode, wherein the control signaling is a signaling for controlling the controllable device and transmitted by a terminal to the multi-mode base station; and
a performing module 520, configured to perform a corresponding operation according to the control signaling.

Referring to FIG. 14, which is a block diagram showing another signaling transmission apparatus on the basis of the embodiment shown in FIG. 13, the apparatus further includes:
a second receiving module 530, configured to receive a control signaling transmitted by the multi-mode base station to the communication node and forwarded by a communication node in the communication network architecture on the basis of the point-to-point communication mode, wherein the control signaling is a signaling for controlling the controllable device and transmitted by a terminal to the multi-mode base station; and
a control module 540, configured to control the performing module to perform a corresponding operation according to the control signaling after the second receiving module receives the control signaling forwarded by the communication node.

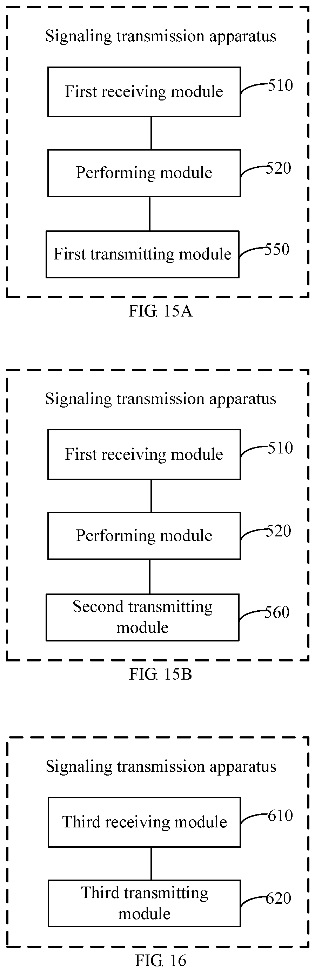

Referring to FIG. 15A, which is a block diagram showing another signaling transmission apparatus on the basis of the embodiment shown in FIG. 13, the apparatus further includes:
a first transmitting module 550, configured to, when the control signaling is used to control the controllable device to perform a feedback operation of information, transmit feedback information collected according to the control signaling to the multi-mode base station on the basis of the point-to-point communication mode, so that the multi-mode base station transmits the feedback information to the terminal.

Referring to FIG. 15B, which is a block diagram showing another signaling transmission apparatus on the basis of the embodiment shown in FIG. 13, the apparatus further includes:
a second transmitting module 560, configured to, when the control signaling is used to control the controllable device to perform a feedback operation of information, transmit the feedback information collected according to the control signaling to the communication node on the basis of the point-to-point communication mode, so that after the communication node transmits the feedback information to the multi-mode base station on the basis of the 5G communication mode, the feedback information is transmitted by the multi-mode base station to the terminal.

FIG. 16 is a block diagram of another signaling transmission apparatus according to an exemplary embodiment, which is used in the multi-mode base station in the above communication network architecture, the apparatus including:
a third receiving module 610, configured to receive a control signaling transmitted by a terminal, wherein the control signaling is a signaling for controlling a controllable device in the communication network architecture; and
a third transmitting module 620, configured to transmit the control signaling to the controllable device on the basis of a point-to-point communication mode, so that the controllable device performs a corresponding operation according to the control signaling.

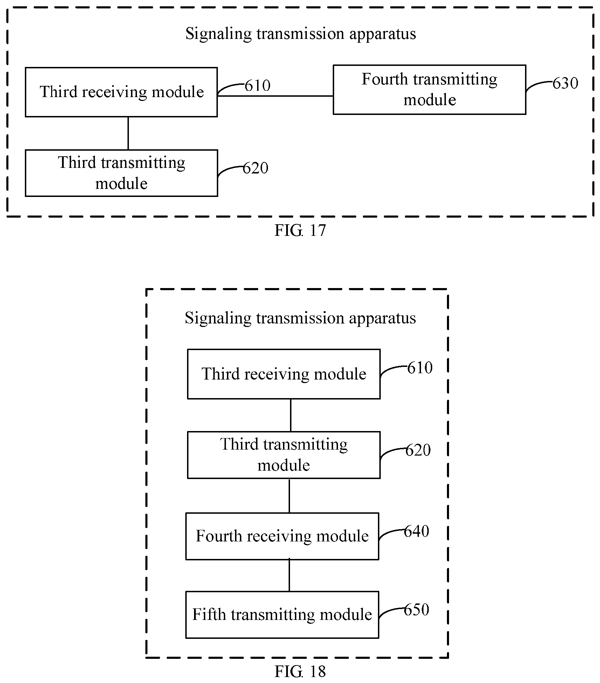

Referring to FIG. 17, which is a block diagram showing another signaling transmission apparatus on the basis of the embodiment shown in FIG. 16, the apparatus further includes:
a fourth transmitting module 630, configured to transmit the control signaling to a communication node in the network architecture on the basis of a 5G communication mode, so that the communication node forwards the control signaling to the controllable device on the basis of the point-to-point communication mode.

Referring to FIG. 18, which is a block diagram showing another signaling transmission apparatus on the basis of the embodiment shown in FIG. 16, the apparatus further includes:
a fourth receiving module 640, configured to receive the feedback information transmitted by the controllable device to the multi-mode base station on the basis of the point-to-point communication mode, wherein the feedback information is information collected by the controllable device on the basis of the control signaling; and
a fifth transmitting module 650, configured to transmit the feedback information to the terminal.

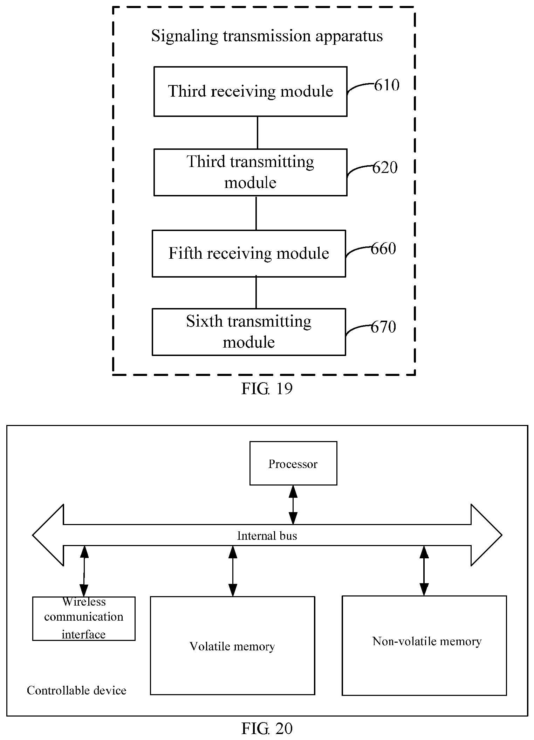

Referring to FIG. 19, which is a block diagram showing another signaling transmission apparatus on the basis of the embodiment shown in FIG. 16, the apparatus further includes:
a fifth receiving module 660, configured to receive the feedback information forwarded by the communication node in the communication network architectures to the multi-mode base station on the basis of the 5G communication mode, wherein the feedback information is information collected by the controllable device on the basis of the control signaling; and
a sixth transmitting module 670, configured to transmit the feedback information to the terminal.

For the apparatus embodiment, since it basically corresponds to the method embodiment, it can be referred to the description of the method embodiment. The apparatus embodiments described above are merely illustrative, wherein the units described as separate components may or may not be physically separated, and the components displayed as units may or may not be physical units, that is, they may be located in one place, or distributed over a plurality of network elements. Some or all of the modules may be selected according to actual needs to achieve the objectives of the present disclosure. Those skilled in the art can understand and implement the method without any inventive work.

Correspondingly, the embodiment of the present disclosure further provides a computer readable storage medium, wherein the storage medium stores a computer program for executing the signaling transmission method on the controllable device side in the above communication network architecture.

Correspondingly, the embodiment of the present disclosure further provides a computer readable storage medium, wherein the storage medium stores a computer program for executing the signaling transmission method on the multi-mode base station side in the above communication network architecture.

Correspondingly, the embodiment of the present disclosure further provides a signaling transmission apparatus, which is used in the controllable device in the communication network architecture, including:
a processor; and
a memory for storing signalings executable by the processor;
wherein the processor is configured to:
   receive a control signaling transmitted by a multi-mode base station on the basis of a point-to-point communication mode, wherein the control signaling is a signaling for controlling the controllable device and transmitted by a terminal to the multi-mode base station; and
   perform a corresponding operation according to the control signaling.

FIG. 20 shows a block diagram of a signaling transmission apparatus 2000 according to an exemplary embodiment of the present disclosure. The apparatus 2000 can be provided as a controllable device, such as a robot or a drone. Referring to FIG. 20, at the hardware level, the device includes a processor, an internal bus, a wireless communication interface, a memory, and a non-volatile memory, and may of course include hardware required for other services. The processor can receive the computer instruction transmitted by the remote controller through the wireless communication interface and then the computer instruction is run on the memory, and the controllable device is formed on the logic level. Of course, this application does not exclude other implementations than software implementations, such as logic devices or combinations of hardware and software, that is, the execution entities of the following processes are not limited to the respective logic units, but may be hardware or logic devices.

Correspondingly, the embodiment of the present disclosure further provides a signaling transmission apparatus, which is used in the multi-mode base station in the communication network architecture, including:
a processor; and
a memory for storing signalings executable by the processor;
wherein the processor is configured to:
   receiving a control signaling transmitted by a terminal, wherein the control signaling is a signaling for controlling a controllable device in the communication network architecture; and
   transmitting the control signaling to the controllable device on the basis of a point-to-point communication mode, so that the controllable device performs a corresponding operation according to the control signaling.

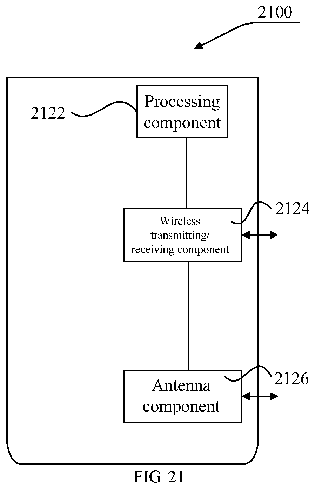

As shown in FIG. 21, which is a schematic structural diagram of a signaling transmission apparatus 2100 according to an exemplary embodiment, the apparatus 2100 may be provided as a multi-mode base station. The multi-mode base station at least supports a 5G communication mode and a point-to-point communication mode. Optionally, the multi-mode base station is a common-mode base station of a 5G communication system and a point-to-point communication system. Referring to FIG. 21, the apparatus 2100 includes a processing component 2122, a wireless transmitting/receiving component 2124, an antenna component 2126, and a signal processing portion specific to the wireless interface. The processing component 2122 may further include one or more processors.

One of the processing components 2322 can be configured to:
receive a control signaling transmitted by a terminal, wherein the control signaling is a signaling for controlling a controllable device in the communication network architecture; and
transmit the control signaling to the controllable device on the basis of a point-to-point communication mode, so that the controllable device performs a corresponding operation according to the control signaling.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative only, and the real scope of the present invention is defined by the appended claims.

It should be understood that the present disclosure is not limited to the precise structures that have been described above and shown in the drawings, and various modifications and changes can be made without departing from the scope of the invention as defined in the claims. The scope of the present invention is limited only by the appended claims.

## Claims

1. A communication network architecture, wherein the communication network architecture comprises a terminal (400), at least one controllable device (100), at least one communication node (300), and a multi-mode base station (200), the multi-mode base station (200) at least configured to support a 5G communication mode and a point-to-point communication mode, wherein
the terminal (400) and the multi-mode base station (200) are configured to communicate with 5G communication mode,
the controllable device (100) and the multi-mode base station (200) are configured to communicate with one another on the basis of the point-to-point communication mode,
the communication node (300) and the controllable device (100) are configured to communicate with one another on the basis of the point-to-point communication mode; and
the communication node (300) and the multi-mode base station (200) are configured to communicate with one another on the basis of the 5G communication mode, and the communication node (300) and the multi-mode base station (200) are configured to communicate with one another through a preset communication interface, and
wherein the multi-mode base station (200) is configured to receive, on the basis of the 5G communication mode, a first control signaling from the terminal (400), and configured to transmit, on the basis of the point-to-point communication mode, the first control signaling to the controllable device (100), and the first control signaling is a signaling for controlling the controllable device (100) in the communication network architecture; and
wherein the multi-mode base station (200) is configured to receive, on the basis of the 5G communication mode, a second control signaling from the terminal (400), and configured to transmit, on the basis of the 5G communication mode, the second control signaling to the communication node (300), and the second control signaling is a signaling for controlling the controllable device (100) in the communication network architecture; and
the communication node (300) is configured to receive, on the basis of the 5G communication node, the second control signaling from the multi-mode base station (200), and configured to forward, on the basis of the point-to-point communication mode, the second control signaling to the controllable device (100).

2. The communication network architecture according to claim 1, wherein
the communication node (300) and the controllable device (100) are configured to communicate with one another by using a wireless communication frequency band corresponding to the 5G communication system.

3. The communication network architecture according to any one of claims 1-2, wherein when the number of the controllable devices (100) is multiple, the controllable devices (100) are configured to communicate with each other on the basis of the point-to-point communication mode.

4. A signaling transmission method, wherein the method is executed by the multi-mode base station (200) in the communication network architecture according to any one of claims 1-3, comprising:
in response to receiving (201) the first control signaling transmitted by the terminal, transmitting (202) the first control signaling to the controllable device on the basis of the point-to-point communication mode, so that the controllable device performs a corresponding operation according to the first control signaling; and
in response to receiving (201) the second control signaling transmitted by the terminal,
transmitting (203) the second control signaling to the communication node in the communication network architecture on the basis of the 5G communication mode, so that the communication node forwards the second control signaling to the controllable device on the basis of the point-to-point communication mode;
wherein the communication node and the multi-mode base station (200) are configured to communicate with one another through a preset communication interface.

5. The method according to claim 4, wherein when the first control signaling is used to control the controllable device (100) to perform a feedback operation of information, the method further comprises:
receiving (204) feedback information transmitted by the controllable device to the multi-mode base station on the basis of the point-to-point communication mode, wherein the feedback information is information collected by the controllable device on the basis of the first control signaling; and
transmitting (205) the feedback information to the terminal.

6. The method according to claim 4, wherein when the second control signaling is used to control the controllable device (100) to perform a feedback operation of information, the method further comprises:
receiving (206) the feedback information forwarded by the communication node in the communication network architecture to the multi-mode base station on the basis of the 5G communication mode, wherein the feedback information is information collected by the controllable device on the basis of the second control signaling; and
transmitting (207) the feedback information to the terminal.

7. A signaling transmission apparatus, wherein the apparatus is implemented in the multi-mode base station (200) in the communication network architecture according to any one of claims 1-3, comprising:
a third receiving module (610), configured to receive the first control signaling transmitted by the terminal,
a third transmitting module (620), configured to transmit the first control signaling to the controllable device (100) on the basis of the point-to-point communication mode, so that the controllable device (100) performs a corresponding operation according to the first control signaling;
the third receiving module (610) being configured to receive the second control signaling transmitted by the terminal, and
a fourth transmitting module (630), configured to transmit the second control signaling to the communication node (300) in the network architecture on the basis of the 5G communication mode, so that the communication node (300) forwards the second control signaling to the controllable device (100) on the basis of the point-to-point communication mode, wherein the communication node (300) and the multi-mode base station (200) are configured to communicate with one another through a preset communication interface;
wherein the apparatus further comprises:
a fourth receiving module (640), configured to receive feedback information transmitted by the controllable device (100) to the multi-mode base station (200) on the basis of the point-to-point communication mode, wherein the feedback information is information collected by the controllable device (100) on the basis of the first control signaling; and
a fifth transmitting module (650), configured to transmit the feedback information to the terminal.

8. The apparatus according to claim 7, wherein the apparatus further comprises:
a fifth receiving module (660), configured to receive the feedback information forwarded by the communication node (300) in the communication network architecture to the multi-mode base station (200) on the basis of the 5G communication mode, wherein the feedback information is information collected by the controllable device (100) on the basis of the second control signaling; and
a sixth transmitting module (670), configured to transmit the feedback information to the terminal.

9. A computer readable storage medium, wherein the storage medium stores a computer program which, when executed by the multi-mode base station, causes the multi-mode base station to perform the signaling transmission method according to any of the claims 4-6.

## Patentansprüche

1. Kommunikationsnetzwerkarchitektur, wobei die Kommunikationsnetzwerkarchitektur ein Endgerät (400), mindestens eine steuerbare Vorrichtung (100), mindestens einen Kommunikationsknoten (300), und eine Multi-Mode-Basisstation (200) aufweist, wobei die Multi-Mode-Basisstation (200) zumindest so ausgebildet ist, dass sie einen 5G-Kommunikationsmodus und einen Punkt-zu-Punkt-Kommunikationsmodus unterstützt, wobei
das Endgerät (400) und die Multi-Mode-Basisstation (200) so ausgebildet sind, dass sie mit dem 5G-Kommunikationsmodus kommunizieren,
die steuerbare Vorrichtung (100) und die Multi-Mode-Basisstation (200) so ausgebildet sind, dass sie auf der Grundlage des Punkt-zu-Punkt-Kommunikationsmodus miteinander kommunizieren,
der Kommunikationsknoten (300) und die steuerbare Vorrichtung (100) so ausgebildet sind, dass sie auf der Grundlage des Punkt-zu-Punkt-Kommunikationsmodus miteinander kommunizieren; und
die Kommunikationsknoten (300) und die Multi-Mode-Basisstation (200) so ausgebildet sind, dass sie auf der Grundlage des 5G-Kommunikationsmodus miteinander kommunizieren, und wobei der Kommunikationsknoten (300) und die Multi-Mode-Basisstation (200) so ausgebildet sind, dass sie über eine vorbestimmte Kommunikationsschnittstelle miteinander kommunizieren, und
wobei die Multi-Mode-Basisstation (200) so ausgebildet ist, dass sie auf der Grundlage des 5G-Kommunikationsmodus eine erste Steuersignalisierung von dem Endgerät (400) empfängt, und so ausgebildet ist, dass sie auf der Grundlage des Punkt-zu-Punkt-Kommunikationsmodus die erste Steuersignalisierung an die steuerbare Vorrichtung (100) überträgt, und wobei die erste Steuersignalisierung eine Signalisierung zur Steuerung der steuerbaren Vorrichtung (100) in der Kommunikationsnetzwerkarchitektur ist; und
wobei die Multi-Mode-Basisstation (200) so ausgebildet ist, dass sie auf der Grundlage des 5G-Kommunikationsmodus eine zweite Steuersignalisierung von dem Endgerät (400) empfängt, und so ausgebildet ist, dass sie auf der Grundlage des 5G-Kommunikationsmodus die zweite Steuersignalisierung an den Kommunikationsknoten (300) überträgt, und wobei die zweite Steuersignalisierung eine Signalisierung zur Steuerung der steuerbaren Vorrichtung (100) in der Kommunikationsnetzwerkarchitektur ist; und
der Kommunikationsknoten (300) so ausgebildet ist, dass er auf der Grundlage des 5G-Kommunikationsmodus die zweite Steuersignalisierung von der Multi-Mode-Basisstation (200) empfängt, und so ausgebildet ist, dass er auf der Grundlage des Punkt-zu-Punkt-Kommunikationsmodus die zweite Steuersignalisierung an die steuerbare Vorrichtung (100) weiterleitet.

2. Kommunikationsnetzwerkarchitektur nach Anspruch 1, wobei der Kommunikationsknoten (300) und die steuerbare Vorrichtung (100) so ausgebildet sind, dass sie unter Verwendung eines drahtlosen Kommunikationsfrequenzbandes, das dem 5G-Kommunikationssystem entspricht, miteinander kommunizieren.

3. Kommunikationsnetzwerkarchitektur nach einem der Ansprüche 1-2, wobei, wenn die Anzahl der steuerbaren Vorrichtungen (100) ein Mehrfaches beträgt, die steuerbaren Vorrichtungen (100) so ausgebildet sind, dass sie auf der Grundlage des Punkt-zu-Punkt-Kommunikationsmodus miteinander kommunizieren.

4. Signalisierungsübertragungsverfahren, wobei das Verfahren von der Multi-Mode-Basisstation (200) in der Kommunikationsnetzwerkarchitektur nach einem der Ansprüche 1-3 ausgeführt wird, umfassend:
als Reaktion auf das Empfangen (201) der von dem Endgerät übertragenen ersten Steuersignalisierung, Übertragen (202) der ersten Steuersignalisierung auf der Grundlage des Punkt-zu-Punkt-Kommunikationsmodus an die steuerbare Vorrichtung, so dass die steuerbare Vorrichtung einen entsprechenden Vorgang gemäß der ersten Steuersignalisierung durchführt; und
als Reaktion auf das Empfangen (201) der von dem Endgerät übertragenen zweiten Steuersignalisierung, Übertragen (203) der zweiten Steuersignalisierung auf der Grundlage des 5G-Kommunikationsmodus an den Kommunikationsknoten in der Kommunikationsnetzwerkarchitektur, so dass der Kommunikationsknoten die zweite Steuersignalisierung auf der Grund des Punkt-zu-Punkt-Kommunikationsmodus an die steuerbare Vorrichtung weiterleitet;
wobei der Kommunikationsknoten und die Multi-Mode-Basisstation (200) so ausgebildet sind, dass sie über eine vorbestimmte Kommunikationsschnittstelle miteinander kommunizieren.

5. Verfahren nach Anspruch 4, wobei, wenn die erste Steuersignalisierung zur Steuerung der steuerbaren Vorrichtung (100) verwendet wird, um einen Feedback-Vorgang von Informationen durchzuführen, das Verfahren ferner umfasst: Empfangen (204) von Feedback-Informationen, die von der steuerbaren Vorrichtung auf der Grundlage des Punkt-zu-Punkt-Kommunikationsmodus an die Multi-Mode-Basisstation übertragen werden, wobei es sich bei den Feedback-Informationen um Informationen handelt, die von der steuerbaren Vorrichtung auf der Grundlage der ersten Steuersignalisierung gesammelt werden; und Übertragen (205) der Feedback-Informationen an das Endgerät.

6. Verfahren nach Anspruch 4, wobei, wenn die zweite Steuersignalisierung zur Steuerung der steuerbaren Vorrichtung (100) verwendet wird, um einen Feedback-Vorgang von Informationen durchzuführen, das Verfahren ferner umfasst: Empfangen (206) der Feedback-Informationen, die von dem Kommunikationsknoten in der Kommunikationsnetzwerkarchitektur auf der Grundlage des 5G-Kommunikationsmodus an die Multi-Mode-Basisstation weitergeleitet werden, wobei es sich bei den Feedback-Informationen um Informationen handelt, die von der steuerbaren Vorrichtung auf der Grundlage der zweiten Steuersignalisierung gesammelt werden; und
Übertragen (207) der Feedback-Informationen an das Endgerät.

7. Signalisierungsübertragungsvorrichtung, wobei die Vorrichtung in der Multi-Mode-Basisstation (200) in der Kommunikationsnetzwerkarchitektur nach einem der Ansprüche 1-3 implementiert ist, aufweisend:
ein drittes Empfangsmodul (610), das dazu ausgebildet ist, die von dem Endgerät übertragene erste Steuersignalisierung zu empfangen,
ein drittes Übertragungsmodul (620), das dazu ausgebildet ist, die erste Steuersignalisierung auf der Grundlage des Punkt-zu-Punkt-Kommunikationsmodus an die steuerbare Vorrichtung (100) zu übertragen, so dass die steuerbare Vorrichtung (100) einen entsprechenden Vorgang gemäß der ersten Steuersignalisierung durchführt;
wobei das dritte Empfangsmodul (610) so ausgebildet ist, dass es die von dem Endgerät übertragene zweite Steuersignalisierung empfängt, und
ein viertes Übertragungsmodul (630), das so ausgebildet ist, dass es die zweite Steuersignalisierung auf der Grundlage des 5G-Kommunikationsmodus an den Kommunikationsknoten (300) in der Netzwerkarchitektur überträgt, so dass der Kommunikationsknoten (300) die zweite Steuersignalisierung auf der Grundlage des Punkt-zu-Punkt-Kommunikationsmodus an die steuerbare Vorrichtung (100) weiterleitet, wobei der Kommunikationsknoten (300) und die Multi-Mode-Basisstation (200) so ausgebildet sind, dass sie über eine vorbestimmte Kommunikationsschnittstelle miteinander kommunizieren;
wobei die Vorrichtung ferner aufweist:
ein viertes Empfangsmodul (640), das so ausgebildet ist, dass es Feedback-Informationen empfängt, die von der steuerbaren Vorrichtung (100) auf der Grundlage des Punkt-zu-Punkt-Kommunikationsmodus an die Multi-Mode-Basisstation (200) übertragen werden, wobei es sich bei den Feedback-Informationen um Informationen handelt, die von der steuerbaren Vorrichtung (100) auf der Grundlage der ersten Steuersignalisierung gesammelt werden; und
ein fünftes Übertragungsmodul (650), das so ausgebildet ist, dass es die Feedback-Informationen an das Endgerät überträgt.

8. Vorrichtung nach Anspruch 7, wobei die Vorrichtung ferner aufweist:
ein fünften Empfangsmodul (660), das dazu ausgebildet ist, die Feedback-Informationen zu empfangen, die von dem Kommunikationsknoten (300) in der Kommunikationsnetzwerkarchitektur auf der Grundlage des 5G-Kommunikationsmodus an die Multi-Mode-Basisstation (200) weitergeleitet werden, wobei es sich bei den Feedback-Informationen um Informationen handelt, die von der steuerbaren Vorrichtung (100) auf der Grundlage der zweiten Steuersignalisierung gesammelt werden; und
ein sechstes Übertragungsmodul (670), das so ausgebildet ist, dass es die Feedback-Informationen an das Endgerät überträgt.

9. Computerlesbares Speichermedium, wobei auf dem Speichermedium ein Computerprogramm gespeichert ist, das bei Ausführung durch die Multi-Mode-Basisstation bewirkt, dass die Multi-Mode-Basisstation das Signalisierungsübertragungsverfahren nach einem der Ansprüche 4-6 durchführt.

## Revendications

1. Architecture de réseau de communication, l'architecture de réseau de communication comprenant un terminal (400), au moins un dispositif contrôlable (100), au moins un nœud de communication (300) et une station de base multimode (200), la station de base multimode (200) étant au moins configurée pour soutenir un mode de communication 5G et un mode de communication point à point,
dans laquelle
le terminal (400) et la station de base multimode (200) sont configurés pour communiquer en mode de communication 5G,
le dispositif contrôlable (100) et la station de base multimode (200) sont configurés pour communiquer l'un avec l'autre sur la base du mode de communication point à point,
le nœud de communication (300) et le dispositif contrôlable (100) sont configurés pour communiquer l'un avec l'autre sur la base du mode de communication point à point ; et
le nœud de communication (300) et la station de base multimode (200) sont configurés pour communiquer l'un avec l'autre sur la base du mode de communication 5G, et le nœud de communication (300) et la station de base multimode (200) sont configurés pour communiquer l'un avec l'autre par l'intermédiaire d'une interface de communication prédéfinie, et
la station de base multimode (200) est configurée pour recevoir, sur la base du mode de communication 5G, une première signalisation de commande provenant du terminal (400), et est configurée pour transmettre, sur la base du mode de communication point à point, la première signalisation de commande au dispositif contrôlable (100), et la première signalisation de commande est une signalisation pour commander le dispositif contrôlable (100) dans l'architecture de réseau de communication ; et
la station de base multimode (200) est configurée pour recevoir, sur la base du mode de communication 5G, une deuxième signalisation de commande provenant du terminal (400), et est configurée pour transmettre, sur la base du mode de communication 5G, la deuxième signalisation de commande au nœud de communication (300), et la deuxième signalisation de commande est une signalisation pour commander le dispositif contrôlable (100) dans l'architecture de réseau de communication ; et
le nœud de communication (300) est configuré pour recevoir, sur la base du mode de communication 5G, la deuxième signalisation de commande provenant de la station de base multimode (200), et est configuré pour envoyer, sur la base du mode de communication point à point, la deuxième signalisation de commande au dispositif contrôlable (100).

2. Architecture de réseau de communication selon la revendication 1,
dans laquelle le nœud de communication (300) et le dispositif contrôlable (100) sont configurés pour communiquer l'un avec l'autre en utilisant une bande de fréquence de communication sans fil correspondant au système de communication 5G.

3. Architecture de réseau de communication selon l'une des revendications 1 à 2,
dans laquelle, lorsque le nombre de dispositifs contrôlables (100) est multiple, les dispositifs contrôlables (100) sont configurés pour communiquer entre eux sur la base du mode de communication point à point.

4. Procédé de transmission de signalisations,
le procédé étant mis en œuvre par la station de base multimode (200) dans l'architecture de réseau de communication selon l'une des revendications 1 à 3, consistant à :
en réponse à la réception (201) de la première signalisation de commande transmise par le terminal, transmettre (202) la première signalisation de commande au dispositif contrôlable sur la base du mode de communication point à point, de sorte que le dispositif contrôlable effectue une opération correspondante en fonction de la première signalisation de commande ; et
en réponse à la réception (201) de la deuxième signalisation de commande transmise par le terminal, transmettre (203) la deuxième signalisation de commande au nœud de communication dans l'architecture de réseau de communication sur la base du mode de communication 5G, de sorte que le nœud de communication envoie la deuxième signalisation de commande au dispositif contrôlable sur la base du mode de communication point à point ;
le nœud de communication et la station de base multimode (200) étant configurés pour communiquer l'un avec l'autre par l'intermédiaire d'une interface de communication prédéfinie.

5. Procédé selon la revendication 4,
dans lequel, lorsque la première signalisation de commande est utilisée pour commander le dispositif contrôlable (100) afin d'effectuer une opération de retour d'informations, le procédé consiste en outre à :
recevoir (204) les informations de retour transmises par le dispositif contrôlable à la station de base multimode sur la base du mode de communication point à point, les informations de retour étant des informations collectées par le dispositif contrôlable sur la base de la première signalisation de commande ; et
transmettre (205) les informations de retour au terminal.

6. Procédé selon la revendication 4,
dans lequel, lorsque la deuxième signalisation de commande est utilisée pour commander le dispositif contrôlable (100) afin d'effectuer une opération de retour d'informations, le procédé consiste en outre à :
recevoir (206) les informations de retour envoyées par le nœud de communication dans l'architecture de réseau de communication à la station de base multimode sur la base du mode de communication 5G, les informations de retour étant des informations collectées par le dispositif contrôlable sur la base de la deuxième signalisation de commande ; et
transmettre (207) les informations de retour au terminal.

7. Appareil de transmission de signalisations, l'appareil étant utilisé dans la station de base multimode (200) dans l'architecture de réseau de communication selon l'une des revendications 1 à 3, comprenant :
un troisième module de réception (610) configuré pour recevoir la première signalisation de commande transmise par le terminal,
un troisième module de transmission (620) configuré pour transmettre la première signalisation de commande au dispositif contrôlable (100) sur la base du mode de communication point à point, de sorte que le dispositif contrôlable (100) effectue une opération correspondante en fonction de la première signalisation de commande ;
le troisième module de réception (610) étant configuré pour recevoir la deuxième signalisation de commande transmise par le terminal, et
un quatrième module de transmission (630) configuré pour transmettre la deuxième signalisation de commande au nœud de communication (300) dans l'architecture de réseau sur la base du mode de communication 5G, de sorte que le nœud de communication (300) envoie la deuxième signalisation de commande au dispositif contrôlable (100) sur la base du mode de communication point à point, le nœud de communication (300) et la station de base multimode (200) étant configurés pour communiquer l'un avec l'autre par l'intermédiaire d'une interface de communication prédéfinie ;
l'appareil comprenant en outre :
un quatrième module de réception (640) configuré pour recevoir les informations de retour transmises par le dispositif contrôlable (100) à la station de base multimode (200) sur la base du mode de communication point à point, les informations de retour étant des informations collectées par le dispositif contrôlable (100) sur la base de la première signalisation de commande ; et
un cinquième module de transmission (650) configuré pour transmettre les informations de retour au terminal.

8. Appareil selon la revendication 7, l'appareil comprenant en outre :
un cinquième module de réception (660) configuré pour recevoir les informations de retour envoyées par le nœud de communication (300) dans l'architecture de réseau de communication à la station de base multimode (200) sur la base du mode de communication 5G, les informations de retour étant des informations collectées par le dispositif contrôlable (100) sur la base de la deuxième signalisation de commande ; et
un sixième module de transmission (670) configuré pour transmettre les informations de retour au terminal.

9. Support de stockage lisible par ordinateur, le support de stockage stockant un programme informatique qui, lorsqu'il est exécuté par la station de base multimode, amène la station de base multimode à mettre en œuvre le procédé de transmission de signalisations selon l'une des revendications 4 à 6.
